# EUROPEAN PATENT APPLICATION

(11) **EP 2 123 713 A1**
(43) Date of publication of application: **25.11.2009**
(21) Application number: 08290441.8
(22) Date of filing: 09.05.2008
(51) Int. Cl.: C08L 67/02, C08L 23/08, C08K 5/098, B29C 49/00, B29C 49/04

(54) **Melt-extruded articles with smooth surfaces**

(71) Applicant: E.I. DU PONT DE NEMOURS AND COMPANY, Wilmington, DE 19898 (US)
(72) Inventor: Leboeuf, Philippe, 92800 Puteaux (FR); Philippoz, Jean-Philppe, Wilmington, DE 19898 (US)
(74) Representative: Heinemann, Monica

(57) **Abstract**

The present invention relates to the field of copolyester elastomer compositions for manufacturing articles by melt extrusion processes at high extrusion rate, which articles exhibit higher quality smooth surface appearance than the articles made from compositions of the state of the art.

## Description

### Field of Invention

The present invention relates to the field of copolyester elastomer compositions for manufacturing articles by melt extrusion processes.

### Background of the invention

Thermoplastic materials are known to be useful material to produce hollow articles, such as tubes and fluid conduits.

Hollow structures made of thermoplastic are well known for a variety of applications, like for example in the building industry for water pipes, radiator pipes or floor-heating pipes or in automotive conduits to carry many different fluids or liquid media.

The manufacture of such hollow structures involves melt extrusion processes including blow molding, profile extrusion and corrugated extrusion. In such processes, the molten material flows through a die assembly and is then shaped into the final part. Details of the shaping and solidification processes vary depending on machine equipment and part to be made, but in general it is an advantage to have a flow rate of material through the die as fast as possible to make the most efficient use of the processing machine and thereby reduce costs. However, as this flow rate is increased, a critical rate is reached at which the molten material emerging form the die shows surface distortion. As a results of such surface distortions, the surface begins to roughen, developing a surface described as shark skin or melt fracture. "Shark skin" is a term used to describe a particular type of surface irregularity which occurs during extrusion of some thermoplastic materials under certain conditions. It is characterized by a series of ridges perpendicular to the flow direction and is described by J. A. Brydson, Flow Properties of Polymer Melts, Van Nostrand-Reinhold Company (1970), pages 78-81. The roughness of the inside of hollow structures used to convey liquid or gaseous fluids is an important factor for the performance of such parts. A macroscopically rough surface creates turbulence that disturbs the flow and leads to higher pressure drop along the flow path; thus resulting in lower efficiency of conveying and higher energy required to achieve the same flow rate.

With the aim of reducing surface distortions without affecting the rate of production, additives called processing aids have been developed to reduce the shear stress in the die. Fluoropolymer additives, boron nitride and acrylic polymers are well known processing aids for polyolefins and PVC. US patent 5,688,457 discloses the use of additives to increase extrusion rate of thermoplastic polymer. Disclosed additives are foam cell nucleating agents including boron nitride. US 2006/0211822 and US patent 6,818,695 disclose extrudable compositions comprising a thermoplastic and a dendritic material wherein the extrudate demonstrates improved rheological behavior and reduced levels of surface defects.

An alternative way of reducing surface distortions has been developed. JP 2007-246782 discloses a polyester elastomer composition comprising an ionomer. Such compositions are said to be suitable for blow molding and lead to blow molded article having less spots on the surface.

EP 0 051 220 discloses a thermoplastic copolyester elastomer composition comprising alkali metal salt of an aliphatic polycarboxylic acid containing at least 20 carbon atoms. Such compositions are said to be blow moldable and do not exhibit phase separation in high shear processing techniques including injection molding and injection blow molding.

Nevertheless, the use of such additives in a thermoplastic copolyester elastomer composition leads to only marginal improvements to the surface aspect of the manufactured part.

There remains a need for copolyester elastomer compositions that are suitable for manufacturing hollow bodies by melt extrusion processes at high extrusion rate and which still exhibit high quality smooth surface appearance.

### Summary of the invention

There is disclosed herein a process for making hollow bodies comprising a step of melt extruding a copolyester elastomer composition comprising:
a) at least one copolyester elastomer; and
b) at least two salts of a carboxylic acid, b1) and b2) having at least six carbon atoms); wherein said composition has an apparent melt viscosity higher than 220 Pa·s measured according ISO 11443:2005(E) under a shear rate of 2000 s⁻¹ and at a processing temperature at or about 30°C above the melting point of the copolyester elastomer.

The copolyester elastomer composition according to the present invention may further comprise from at or about 0.01 wt-% to at about 50 wt-% modifiers and other ingredients c), the weight percentage being based on the weight of the at least one copolyester elastomer a), the at least two salts of carboxylic acids b) and the modifiers and others ingredients c), i.e. the sum of components a), b) and c).

The use of the copolyester elastomer composition according to the present invention leads to articles made by melt extrusion processes at high extrusion rate which have higher quality smooth surface appearance that the articles made from compositions of the state of the art.

In a second aspect, the invention provides a method to improve the surface appearance of hollow bodies manufactured by melt extrusion processes at high extrusion rate by using a copolyester elastomer composition comprising a) at least one copolyester elastomer; and b) at least two salts of a carboxylic acid having at least six carbon atoms; wherein said composition has an apparent melt viscosity higher than 220 Pa·s measured according ISO 11443:2005(E) under a shear rate of 2000 s⁻¹ and at a processing temperature at or about 30°C above the melting point of the copolyester elastomer

In a third aspect, the invention provides a blow molding process for manufacturing a hollow body made out of the copolyester elastomer composition of the invention.

### Description of the drawings

**FIG. 1-14** are photographs of polymer strands observed through a stereomicroscope at a low magnification, the scale being given on the bottom right corner of each Figure. Polymer strands appear in black in the center of the photographs. Polymer strands were produced by using a capillary rheometer with a die having 1 mm diameter, 20 mm length and 180° entrance angle in accordance with test method ISO 11443:2005(E).
**FIG. 1A** is a photograph of a strand made of a comparative copolyester elastomer composition comprising a copolyester with an apparent viscosity of 198 Pa s at a shear rate of 2000 s⁻¹ and 240°C (C1), which strand was produced at a shear rate of 5000 s⁻¹.
**FIG. 1B** is a photograph of a strand made of a comparative copolyester elastomer composition comprising a copolyester with an apparent viscosity of 198 Pa s at a shear rate of 2000 s⁻¹ and 240°C (C1), which strand was produced at a shear rate of 7000 s⁻¹.
**FIG. 2** is a photograph of a strand made of a comparative copolyester elastomer composition comprising a copolyester with an apparent viscosity of 298 Pa s at a shear rate of 2000 s⁻¹ and 240°C (C2), which strand was produced at a shear rate of 5000 s⁻¹.
**FIG. 3** is a photograph of a strand made of a comparative copolyester elastomer composition comprising boron nitride (C3), which strand was produced at a shear rate of 5000 s⁻¹.
**FIG. 4** is a photograph of a strand made of a comparative copolyester elastomer composition comprising talc (C4), which strand was produced at a shear rate of 5000 s⁻¹.
**FIG. 5A** is a photograph of a strand made of a comparative copolyester elastomer composition comprising an ionomer (C5), which strand was produced at a shear rate of 5000 s⁻¹.
**FIG. 5B** is a photograph of a strand made of a comparative copolyester elastomer composition comprising an ionomer (C5), which strand was produced at a shear rate 7000 s⁻¹.
**FIG. 6** is a photograph of a strand made of a comparative copolyester elastomer composition comprising an ionomer (C6), which strand was produced at a shear rate of 5000 s⁻¹.
**FIG. 7****.A** is a photograph of a strand made of a comparative copolyester elastomer composition comprising boron nitride and an ionomer (C7), which strand was produced at a shear rate of 5000 s⁻¹.

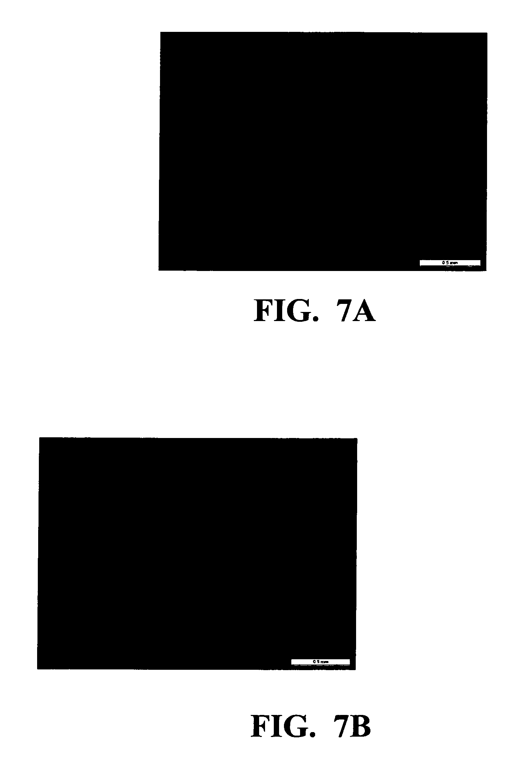

**FIG. 7****.B** is a photograph of a strand made of a comparative copolyester elastomer composition comprising boron nitride and an ionomer (C7), which strand was produced at a shear rate of 7000 s⁻¹.

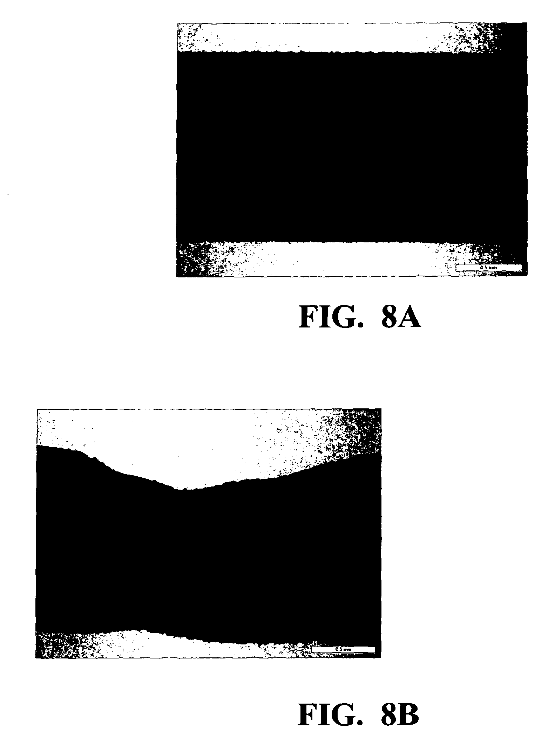

**FIG. 8A** is a photograph of a strand made of a comparative copolyester elastomer composition comprising talc and an ionomer (C8), which strand was produced at a shear rate of 5000 s⁻¹.
**FIG. 8B** is a photograph of a strand made of a comparative copolyester elastomer composition comprising talc and an ionomer (C8), which strand was produced at a shear rate of 7000 s⁻¹.

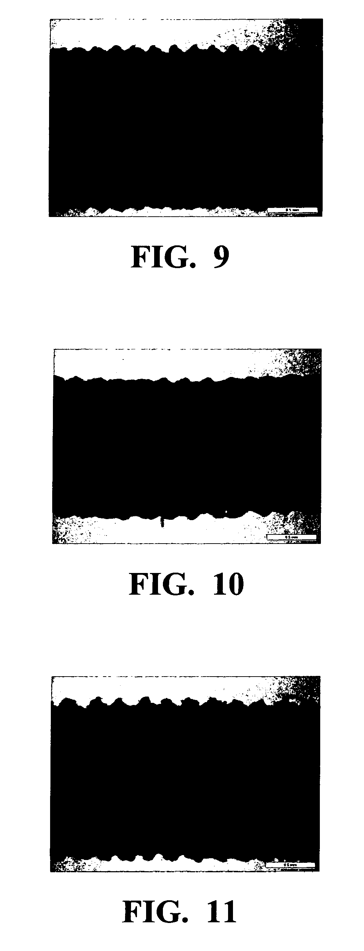

**FIG. 9** is a photograph of a strand made of a comparative copolyester elastomer composition comprising sodium montanate (C9), which strand was produced at a shear rate of 5000 s⁻¹.
**FIG. 10** is a photograph of a strand made of a comparative copolyester elastomer composition) comprising sodium stearate (C10, which strand was produced at a shear rate of 5000 s⁻¹.
**FIG. 11** is a photograph of a strand made of a comparative copolyester elastomer composition comprising calcium montanate (C11), which strand was produced at a shear rate of 5000 s⁻¹.

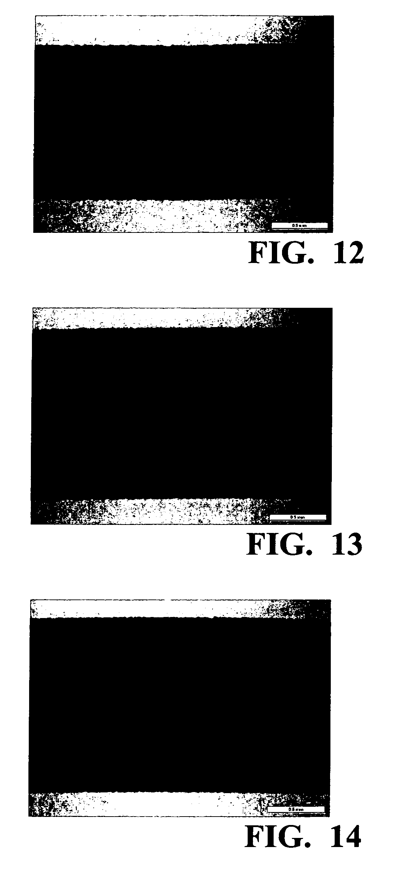

**FIG. 12** is a photograph of a strand made of a copolyester elastomer composition according to the present invention comprising an ionomer and sodium montanate (E1), which strand was produced at a shear rate of 7000 s⁻¹.
**FIG. 13** is a photograph of a strand made of a copolyester elastomer composition according to the present invention comprising an ionomer and sodium stearate (E2), which strand was produced at a shear rate of 7000 s⁻¹.
**FIG. 14** is a photograph of a strand made of a copolyester elastomer composition according to the present invention comprising an ionomer and calcium montanate (E3), which strand was produced at a shear rate of 7000 s⁻¹.

### Detailed description of the invention

As used herein, the term "melt extrusion processes" means any techniques where the molten material flows through a die and is then shaped into the final part, such as for example blow molding, profile extrusion and corrugated extrusion. These processes induce shear forces on the melt, and in most cases the shear rate is highest at the die. The apparent shear rate at the die can be easily estimated using formulae from the open literature, based on die geometry and flow rate through the die. In the case of a flow through the annular gap between a circular die and a central core pin, the apparent shear rate Gₐ is Gₐ = 48 S /(D_{d}- D_{c}), where S is the linear speed of the melt through the die gap, D_{d} is the die diameter and D_{c} is the diameter of the central core. Industrial processes such as blow molding and profile extrusion are often practiced at a speed involving a high shear rate at the die. As used therein, the term "high shear rate" means a shear rate value at or in excess of 2000 s⁻¹.

The copolyester elastomer composition used in the present invention comprises at least one copolyester elastomer. Copolyester elastomers can be copolyetherester elastomers or copolyesterester elastomers. Preferably, the one or more copolyester elastomers used in the present invention is a copolyetherester elastomer. Copolyetheresters are copolymers that have a multiplicity of recurring long-chain ester units and short-chain ester units joined head-to-tail through ester linkages, said long-chain ester units being represented by formula (A): 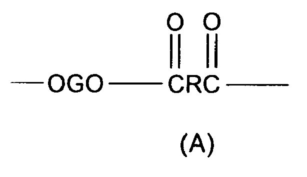 and said short-chain ester units being represented by formula (B): 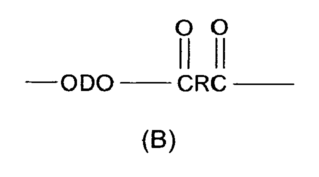 wherein
G is a divalent radical remaining after the removal of terminal hydroxyl groups from poly(alkylene oxide)glycols having a number average molecular weight of between about 400 and about 6000, or preferably between about 400 and about 3000;
R is a divalent radical remaining after removal of carboxyl groups from a dicarboxylic acid having a molecular weight of less than about 300;
D is a divalent radical remaining after removal of hydroxyl groups from a diol having a molecular weight less than about 250; and
wherein said copolyetherester(s) preferably contain from about 15 to about 99 wt-% short-chain ester units and about 1 to about 85 wt-% long-chain ester units, or wherein the copolyetherester(s) more preferably contain from about 20 to about 95 wt-% short-chain ester units and about 5 to about 80 wt-% long-chain ester units.

As used herein, the term "long-chain ester units" as applied to units in a polymer chain refers to the reaction product of a long-chain glycol with a dicarboxylic acid. Suitable long-chain glycols are poly(alkylene oxide) glycols having terminal (or as nearly terminal as possible) hydroxyl groups and having a number average molecular weight of from about 400 to about 6000, and preferably from about 600 to about 3000. Preferred poly(alkylene oxide) glycols include poly(tetramethylene oxide) glycol, poly(trimethylene oxide) glycol, poly(propylene oxide) glycol, poly(ethylene oxide) glycol, copolymer glycols of these alkylene oxides, and block copolymers such as ethylene oxide-capped poly(propylene oxide) glycol. Mixtures of two or more of these glycols can be used.

The term "short-chain ester units" as applied to units in a polymer chain of the copolyetheresters refers to low molecular weight compounds or polymer chain units having molecular weights less than about 550. They are made by reacting a low molecular weight diol or a mixture of diols (molecular weight below about 250) with a dicarboxylic acid to form ester units represented by Formula (B) above. Included among the low molecular weight diols which react to form short-chain ester units suitable for use for preparing copolyetheresters are acyclic, alicyclic and aromatic dihydroxy compounds. Preferred compounds are diols with about 2-15 carbon atoms such as ethylene, propylene, isobutylene, tetramethylene, 1,4-pentamethylene, 2,2-dimethyltrimethylene, hexamethylene and decamethylene glycols, dihydroxycyclohexane, cyclohexane dimethanol, resorcinol, hydroquinone, 1,5-dihydroxynaphthalene, etc. Especially preferred diols are aliphatic diols containing 2-8 carbon atoms, and a more preferred diol is 1,4-butanediol. Included among the bisphenols which can be used are bis(p-hydroxy)diphenyl, bis(p-hydroxyphenyl)methane, and bis(p-hydroxyphenyl)propane. Equivalent ester-forming derivatives of diols are also useful (e.g., ethylene oxide or ethylene carbonate can be used in place of ethylene glycol or resorcinol diacetate can be used in place of resorcinol). As used herein, the term "diols" includes equivalent ester-forming derivatives such as those mentioned. However, any molecular weight requirements refer to the corresponding diols, not their derivatives.

Dicarboxylic acids that can react with the foregoing long-chain glycols and low molecular weight diols to produce the copolyetheresters are aliphatic, cycloaliphatic or aromatic dicarboxylic acids of a low molecular weight, i.e. having a molecular weight of less than about 300. The term "dicarboxylic acids" as used herein includes functional equivalents of dicarboxylic acids that have two carboxyl functional groups that perform substantially like dicarboxylic acids in reaction with glycols and diols in forming copolyetherester polymers. These equivalents include esters and ester-forming derivatives such as acid halides and anhydrides. The molecular weight requirement pertains to the acid and not to its equivalent ester or ester-forming derivative. Thus, an ester of a dicarboxylic acid having a molecular weight greater than 300 or a functional equivalent of a dicarboxylic acid having a molecular weight greater than 300 are included provided the corresponding acid has a molecular weight below about 300. The dicarboxylic acids can contain any substituent groups or combinations that do not substantially interfere with the copolyetherester polymer formation and use of the polymer in the compositions of this invention.

The term "aliphatic dicarboxylic acids," as used herein, refers to carboxylic acids having two carboxyl groups each attached to a saturated carbon atom. If the carbon atom to which the carboxyl group is attached is saturated and is in a ring, the acid is cycloaliphatic. Aliphatic or cycloaliphatic acids having conjugated unsaturation often cannot be used because of homopolymerization. However, some unsaturated acids, such as maleic acid, can be used.

Aromatic dicarboxylic acids, as the term is used herein, are dicarboxylic acids having two carboxyl groups each attached to a carbon atom in a carbocyclic aromatic ring structure. It is not necessary that both functional carboxyl groups be attached to the same aromatic ring and where more than one ring is present, they can be joined by aliphatic or aromatic divalent radicals or divalent radicals such as -O- or -SO₂-.

Representative useful aliphatic and cycloaliphatic acids that can be used include sebacic acid; 1,3-cyclohexanedicarboxylic acid; 1,4-cyclohexanedicarboxylic acid; 1,2-cyclohexanedicarboxylic acid; adipic acid; glutaric acid; 2-ethylsuberic acid; cyclopentanedicarboxylic acid; decahydro-1,5-naphthylene dicarboxylic acid; 4,4'-bicyclohexyl dicarboxylic acid; decahydro-2,6-naphthylene dicarboxylic acid; 4,4'-methylenebis(cyclohexyl) carboxylic acid; and 3,4-furan dicarboxylic acid. Preferred acids are cyclohexane-dicarboxylic acids and adipic acid.

Representative aromatic dicarboxylic acids include phthalic, terephthalic and isophthalic acids; bibenzoic acid; substituted dicarboxy compounds with two benzene nuclei such as bis(p-carboxyphenyl)methane; *p*-oxy-1,5-naphthalene dicarboxylic acid; 2,6-naphthalene dicarboxylic acid; 2,7-naphthalene dicarboxylic acid; 4,4'-sulfonyl dibenzoic acid and C₁-C₁₂ alkyl and ring substitution derivatives thereof, such as halo, alkoxy, and aryl derivatives. Hydroxyl acids such as p-(beta-hydroxyethoxy)benzoic acid can also be used provided an aromatic dicarboxylic acid is also used.

Aromatic dicarboxylic acids are a preferred class for preparing the copolyetherester polymers useful for this invention. Among the aromatic acids, those with 8-16 carbon atoms are preferred, particularly terephthalic acid alone or with a mixture of phthalic and/or isophthalic acids.

The copolyetheresters preferably comprise about 15 to about 99 wt-% short-chain ester units corresponding to Formula (B) above, the remainder being long-chain ester units corresponding to Formula (A) above. The copolyetheresters more preferably comprise about 20 to about 95 wt-%, and even more preferably about 50 to about 90 wt-% short-chain ester units, where the remainder is long-chain ester units. More preferably, at least about 70% of the groups represented by R in Formulae (A) and (B) above are 1,4-phenylene radicals and at least about 70% of the groups represented by D in Formula (B) above are 1,4-butylene radicals and the sum of the percentages of R groups which are not 1,4-phenylene radicals and D groups that are not 1,4-butylene radicals does not exceed 30%. If a second dicarboxylic acid is used to make the copolyetherester, isophthalic acid is preferred and if a second low molecular weight diol is used, ethylene glycol, 1,3-propanediol, cyclohexanedimethanol, or hexamethylene glycol are preferred.

A blend or mixture of two or more copolyetherester elastomers can be used. The copolyetherester elastomers used in the composition need not on an individual basis come within the values disclosed hereinbefore for the elastomers. However, the blend of two or more copolyetherester elastomers must conform to the values described herein for the copolyetheresters on a weighted average basis. For example, in a mixture that contains equal amounts of two copolyetherester elastomers, one copolyetherester can contain 60 wt-% short-chain ester units and the other copolyetherester can contain 30 wt-% short-chain ester units for a weighted average of 45 wt-% short-chain ester units.

Preferably, the copolyetherester elastomers are prepared from esters or mixtures of esters of isophthalic acid and/or terephthalic acid, 1,4-butanediol and/or 1,3-propanediol and poly(tetramethylene ether)glycol or poly(trimethylene ether) glycol or ethylene oxide-capped polypropylene oxide glycol, or are prepared from esters of terephthalic acid, e.g. dimethylterephthalate, 1,4-butanediol and poly(ethylene oxide)glycol. More preferably, the copolyetherester elastomers are prepared from esters of terephthalic acid, 1,4-butanediol and poly(tetramethylene ether)glycol.

Copolyetherester elastomers suitable for the present invention are commercially available from E. I. du Pont de Nemours and Company, Wilmington, Delaware under the trademark Hytrel^{®}.

Preferably, the at least one copolyester elastomer a) is present in the copolyester elastomer composition according to the present invention in an amount form at or about 80 wt-% to at or about 99.8 wt-% and more preferably in an amount from at or about 85 wt-% to at or about 98 wt-%, the weight percentages being based on the total weight of the at least one copolyester elastomer and the at least two salts of carboxylic acids, i.e. the sum of components a) and b) in accordance with the invention.

The copolyester elastomer composition used in the present invention comprises at least two salts of a carboxylic acid, b1) and b2), having at least 6 carbon atoms. Preferably, one of the at least two salts is b1) a sodium ionomer or a mixture of sodium ionomers. And preferably, the second of the at least two salts is b2) a salt of a fatty acid or a mixture of salts of one or more fatty acids.

lonomers are thermoplastic resins that contain metal ions in addition to the organic backbone of the polymer. Ionomers are ionic copolymers formed from an olefin such as ethylene and α,β-unsaturated C₃-C₈ carboxylic acid, such as for example acrylic acid (AA), methacrylic acid (MAA) or maleic acid monoethylester (MAME), wherein at least some of the carboxylic acid moieties in the copolymer are neutralized to form the corresponding carboxylate salts. Ionomers may optionally comprise softening comonomers selected from alkyl acrylate and alkyl methacrylate wherein the alkyl groups have from one to eight carbon atoms. Overall, ionomers can be described as E/X/Y copolymers where E is an olefin such as ethylene, X is a α,β-unsaturated C₃-C₈ carboxylic acid, and Y is a softening comonomer, wherein X is from at or about 2 wt-% to at or about 30 wt-% of the E/X/Y copolymer and Y can be present in an amount of from about 0 to about 40 wt-% of the E/X/Y copolymer, wherein the carboxylic acid functionalities are at least partially neutralized.

Ionomers used in the copolyester elastomer composition according to the present invention are neutralized by sodium ions. Preferably, about 10 to about 99.9 % of the acid moieties of the acid copolymer are nominally neutralized by sodium cations. Basic sodium compounds suitable for neutralizing the acid copolymer include formates, acetates, nitrates, carbonates, hydrogencarbonates, oxides, hydroxides or alkoxides of the sodium metal.
Suitable ionomers for use in the present invention are commercially available under the trademark Surlyn^{®} from E. I. du Pont de Nemours and Company, Wilmington, Delaware.

Salts of fatty acids that may be employed in the composition of the invention include derivatives of aliphatic, mono-functional organic acids. The organic acids may be saturated or unsaturated. Preferably, the salt having at least six carbon atoms used in the copolyester elastomer composition according to the present invention are derived from sodium or calcium salts of fatty acids. Fatty acids are generally composed of a chain of alkyl groups containing from about 2 to about 80 carbon atoms and having a terminal methyl group and a terminal carboxyl group. Fatty acids can be saturated, unsaturated or multi-unsaturated fatty acids. Examples of fatty acids suitable for use include, but are not limited to, caproic acid; caprylic acid; pelargonic acid; capric acid; lauric acid; myristic acid; palmitic acid; margaric acid; stearic acid; oleic acid; arachidic acid; behenic acid; lignoceric acid; cerotic acid; montanic acid; and melissic acid. Preferably, the fatty acid used in the copolyester elastomer composition according to the present invention is a saturated fatty acid and more preferably, it contains from about 12 to 30 carbons atoms. Examples of preferred sodium or calcium salt for use in the present invention are sodium stearate, sodium montanate and calcium montanate.

Preferably, the sodium ionomer or mixture of sodium ionomers b1) is present in an amount from at or about 0.1 wt-% to at or about 20 wt-%; and the salt of a fatty acid or a mixture of salts of fatty acids b2) is present in an amount from at or about 0.1 to at or about 20 wt-%, provided that the sum of components b1)+ b2) is less than or equal to 20 wt-%, the weight percentages being based on the total weight of the at least one copolyester elastomer and the at least two salts of carboxylic acids, i.e. the sum of components a) and b) in accordance with the invention.

The copolyester elastomer composition used in the present invention may further include ionomers that are neutralized by a metal other than sodium such as for example alkali metals like lithium or potassium; transition metals like manganese or zinc; or alkaline earth metals and mixtures or combinations of such metals. The copolyester elastomer composition used in the present invention may further include fatty acids that are neutralized by a metal other than sodium such as for example zinc, magnesium, barium, lithium, and aluminum, and mixtures or combinations of such metals.

The copolyester elastomer composition used in the present invention may further include modifiers and other ingredients c), including, without limitation, oxidative stabilizers, lubricants, UV light stabilizers, antistatic agents, coloring agents, fillers, fibers and reinforcing agents, flame retardants, impact modifiers and other processing aids, known in the polymer compounding art. These ingredients may be present in the composition in amounts and in forms well known in the art, including in the form of so-called nano-materials where at least one of the dimensions of the particles is in the range of 1 to 1000 nm. When used, additional modifiers and other ingredients are preferably present in about 0.01 wt-% to about 50 wt-%, the weight percentages being based on the total weight of the copolyester elastomer composition, i.e. the sum of components a), b) and c) in accordance with the invention. The copolyester elastomer composition used in the present invention comprising additional modifiers and other ingredients c) are made from a) at or about 40 wt-% to at or about 99.8 wt-% of at least one copolyester elastomer, b) from at or about 0.1 wt-% to at or about 20 wt-% of at least two salts of a carboxylic acid, b1) and b2) having at least six carbon atoms and c) from at or about 0.01 wt-% to at or about 50 wt-% of modifiers and other ingredients, the weight percentages being based on the total weight of the copolyester elastomer composition, i.e. the sum of components a), b) and c) in accordance with the invention.

The copolyester elastomer composition used in the present invention are melt-mixed blends, wherein all of the polymeric components are well-dispersed within each other and all of the non-polymeric ingredients are well-dispersed in and bound by the polymer matrix, such that the blend forms a unified whole. Any melt-mixing method may be used to combine the polymeric components and non-polymeric ingredients of the present invention. For example, the polymeric components and non-polymeric ingredients may be added to a melt mixer, such as, for example, a single or twin-screw extruder, a blender, a kneader, Haake mixer, a Brabender mixer, a Banbury mixer or a roll mixer, either all at once through a single step addition, or in a stepwise fashion, and then melt-mixed. When adding the polymeric components and non-polymeric ingredients in a stepwise fashion, part of the polymeric components and/or non-polymeric ingredients are first added and melt-mixed with the remaining polymeric components and non-polymeric ingredients being subsequently added and further melt-mixed until a well-mixed composition is obtained.

With the aim of being suitable for manufacturing hollow structures by melt extrusion processes, the copolyester elastomer composition according to the present invention must have an apparent melt viscosity higher than 220 Pa·s measured according to ISO 11443:2005(E) under a shear rate of 2000 s⁻¹ and at a processing temperature at or about 30°C above the melting point of the composition. Such high apparent melt viscosities are necessary especially with blow molding because the parison is freely suspended as it emerges from the die and must bear its own weight without being stretched or sagged in an uncontrollable fashion during this phase.

The copolyester elastomer composition used according to the present invention are particularly suited for manufacturing elongated hollow bodies such as for example pipe, duct, conduit, tube or tubings which may used to convey fluids (e.g. liquid media, air, gases). Such elongated hollow bodies are manufactured by melt extrusion processes. Examples of melt extrusion processes include without limitations blow molding, profile extrusion and corrugated extrusion. Blow molding is a conventional technique used for manufacturing hollow plastic articles. The blow molding process generally begins with producing a polymer melt in a horizontal extruder, then the melt turns 90° in a specially designed head and is extruded vertically through a pin and die tooling, forming a tube of molten resin called a parison. While it is still in a hot moldable condition, this parison is positioned between two halves of an open mold having a mold cavity of a shape appropriate to the required external shape of the article to be manufactured. When the parison reaches the proper length, the mold halves are closed around it, the end of the hollow parison are sealed and the article may be manufactured either by a) pressurized air (or other compressed gas) which is introduced in the interior of the parison to inflate it to the shape of mold or to expand it against the sides of the mold cavity or b) vacuum expansion against the surface of the mold cavity. After a cooling period, the mold is opened and the blow molded article is ejected. Other variants of blow molding process are well-known in the art, including, without limitation, suction blow molding, coextrusion blow molding, sequential blow molding, processes involving parison manipulation or laying down, and combinations of two or more of these processes. When a suction blow molding process is used, the mold is already closed; the parison enters into the mold through an opening at the top surface moves through the mold cavity by suction, generally with the help of an additional flow of gas. When a coextrusion blow molding process is used, the parison is made with two or more layers of different materials. When a sequential blow molding process is used, the parison is made of different materials alternating along its length.

According to a preferred embodiment of the present invention, the hollow bodies made out of the copolyester elastomer composition of the present invention are manufactured by blow molding, and more preferably by suction blow molding.

Profile extrusion and corrugated extrusion are conventional techniques used for manufacturing hollow plastic articles in arbitrary long lengths. During profile and corrugated extrusion, the composition is extruded in a hot moldable state through the gap between the pin and the die of an extrusion head. By "profile extrusion", it is meant a technique used to produce a hollow article having the same cross section over a long length. The pin and die are shaped to produce the desired cross-section, and for example an annular die-gap between concentric circular pin and die is used to make tubes and pipes. After it exits the die assembly, the melt may be drawn to a thinner cross section through an air gap. The melt is then cooled and its shape is maintained as to solidify it into an extruded hollow body. Tubes and pipes made of copolyester elastomer with this process have been used for pneumatic applications and fluid conveying in many industries. By "corrugated extrusion", it is meant a technique used to produce hollow articles comprising corrugated regions that may be interrupted by smooth regions. In this case, the pin and the die are positioned inside the two halves of the mold blocks of the equipment. When the molten material coming from the extrusion head reaches and enters the mold blocks, it is drawn up to the shape of the mold either by heated air or by vacuum expansion against the surface of the mold cavity. Such a process is described for example in US 6,764,627, US 4,319,872 or WO 03/055664. Continuously or partially corrugated hollow bodies made out of the copolyester elastomer composition according to the present invention enable complex routing of the hollow body in constrained spaces, such as those available in under hood areas of automobiles and other vehicles.

According to a preferred embodiment of the present invention, the hollow bodies made out of the copolyester elastomer composition of the present invention are manufactured by extrusion and more preferably by profile extrusion.

The invention will be further described in the Examples below.

### EXAMPLES

The following materials were used for preparing the compositions according to the present invention and comparative examples:
Copolyester A: a copolyetherester elastomer containing 26 wt-% of poly(tetramethylene oxide) having an average molecular weight of about 1000 as polyether block segments, the weight percentage being based on the total weight of the copolyetherester elastomer. The short chain ester units are polybutylene terephthalate segments. The melting temperature of the copolyetherester elastomer is 209°C (measured according to ISO 11357-3, DSC, 2^{nd} heating cycle at 10°C/min), the hardness is 60 shore D (measured according to ISO 868 at 15s), and the apparent melt viscosity at 240°C under a shear rate of 2000 s⁻¹ is 180 Pa•s (measured according to ISO 11443:2005(E)). Such a product is commercially available from E.I. DuPont de Nemours and Company, Wilmington, Delaware, USA under the trademark Hytrel^{®}.
Copolyester B: a copolyetherester elastomer containing 26 wt-% of poly(tetramethylene oxide) having an average molecular weight of about 1000 as polyether block segments, the weight percentage being based on the total weight of the copolyetherester composition. The short chain ester units are polybutylene terephthalate segments. The melting temperature of the copolyetherester elastomer is 209°C, the hardness is 60 shore D, and the apparent melt viscosity at 240°C under a shear rate of 2000 s⁻¹ is 290 Pa•s. Such a product is commercially available from E.I. DuPont de Nemours and Company, Wilmington, Delaware, USA under the trademark Hytrel^{®}.
As required for the manufacturing process of copolyetherester elastomers and well-known to those skilled in the art, copolyesters A and B contain from 0.05 to 2 wt-% of phenolic and/or aromatic diamine antioxidant.
Boron nitride: HCP powder grade supplied by Momentive Performance Materials, Wilton, Connecticut, USA.
Talc: Steamic ODS^{™} supplied by Luzenac, Toulouse, France.
Ionomer: a copolymer comprising ethylene, 11 wt-% MAA, wherein about 58% of the available carboxylic acid moieties are neutralized with sodium cations. Such a product is commercially available from E.I. DuPont de Nemours and Company, Wilmington, Delaware, USA under the trademark Surlyn^{®}.
Sodium stearate: supplied by Fluka Chemie, Buchs, Switzerland.
Sodium montanate: Licomont^{®} NAV101 supplied by Clariant Produkte, Gerstholfen, Germany.
Calcium montanate: Licomont^{®} CAV102 supplied by Clariant Produkte, Gerstholfen, Germany.

The compositions of Examples (abbreviated as "E" In the Table) and Comparative Examples (abbreviated as "C") were prepared by melt blending the ingredients shown in Table 1 in a 30 mm twin screw kneader operating at about 230°C using a screw speed of about 200 rpm. All ingredients were introduced in the first barrel and the melt temperature measured with hand-held probe was about 275°C. Upon exiting the extruder, the compositions were cooled and pelletized.

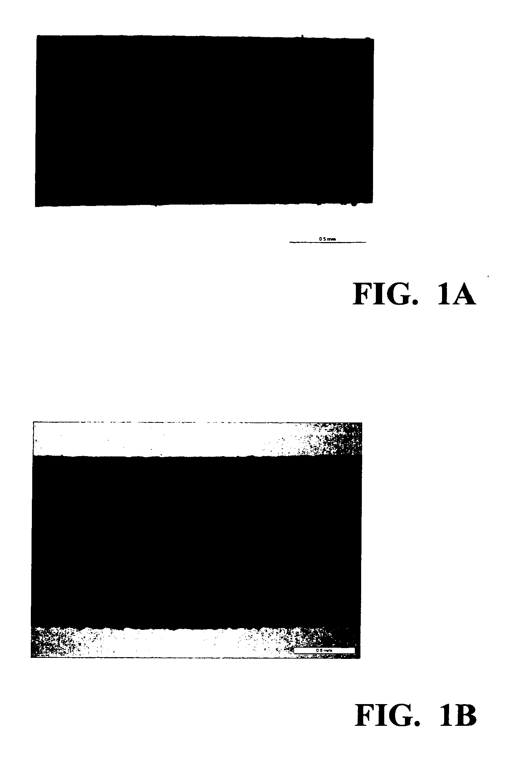

The melt extrusion behavior of the polymer blends of Examples **E1-E3** and Comparative Example **C1-C11** was tested using a capillary rheometer (Dynisco LCR7000, Kayeness Polymer Test Systems, Honey Brook PA) with a die having 1 mm diameter, 20 mm length and 180° entrance angle in accordance with test method ISO 11443:2005(E). The purpose is to visually evaluate the surface appearance of strands extruded at different shear rates, in particular at a shear rate of 5000 s⁻¹ and at a shear rate of 7000 s⁻¹. Surface appearance was assessed by visually inspecting the surfaces of strands specimens. Surfaces having a relatively rough appearance were deemed to be "poor," while surfaces having a relatively smooth appearance were deemed to be "good". Pictures of strands are shown in Figures 1 to 14. The melt temperature was 240°C, i.e. about 30°C above the melting temperature of the copolyetherester component of the blends. In the same experiment, the instrument provided a measure of viscosity at 2000 s⁻¹ shear rate.

**Table 1**

| | **C1** | **C2** | **C3** | **C4** | **C5** | **C6** | **C7** | **C8** | **C9** | **C10** | **C11** | **E1** | **E2** | **E3** |
|---|---|---|---|---|---|---|---|---|---|---|---|---|---|---|
| Copolyester A | 100 | - | 4.5 | 4.5 | 90 | - | 90 | 90 | 4.5 | 4.5 | 4.5 | 90 | 90 | 90 |
| Copolyester B | - | 100 | 95 | 95 | - | 95 | - | - | 95 | 95 | 95 | - | - | - |
| Boron nitride | - | - | 0.5 | - | - | - | 0.5 | - | - | - | - | - | - | - |
| Talc | - | - | - | 0.5 | - | - | - | 0.5 | - | - | - | - | - | |
| lonomer | - | - | - | | 10 | 5 | 9.5 | 9.5 | | | | 9.5 | 9.5 | 9.5 |
| Sodium stearate | - | - | - | | | | | | | 0.5 | | - | 0.5 | - |
| Sodium montanate | - | - | - | | | | - | | 0.5 | | - | 0.5 | - | - |
| Calcium montanate | - | - | - | | | | | - | | | 0.5 | - | - | 0.5 |
| viscosity 2000 s⁻¹ and 240°C / Pa s | 198 | 298 | 297 | 296 | 281 | 323 | 296 | 290 | 283 | 281 | 294 | 279 | 254 | 268 |
| Strand aspect at 5000 s⁻¹ | good | poor | poor | poor | poor | poor | poor | poor | poor | poor | poor | good | good | good |
| Strand aspect at 7000 s⁻¹ | good | poor | poor | poor | poor | poor | poor | poor | poor | poor | poor | good | good | good |

| | | | | | | | | | | | | | | |
|---|---|---|---|---|---|---|---|---|---|---|---|---|---|---|
| Ingredient quantities are given in wt-% on the basis of the total weight of the composition. The viscosity is shown in this table as a number rounded to the next nearest unit. | | | | | | | | | | | | | | |

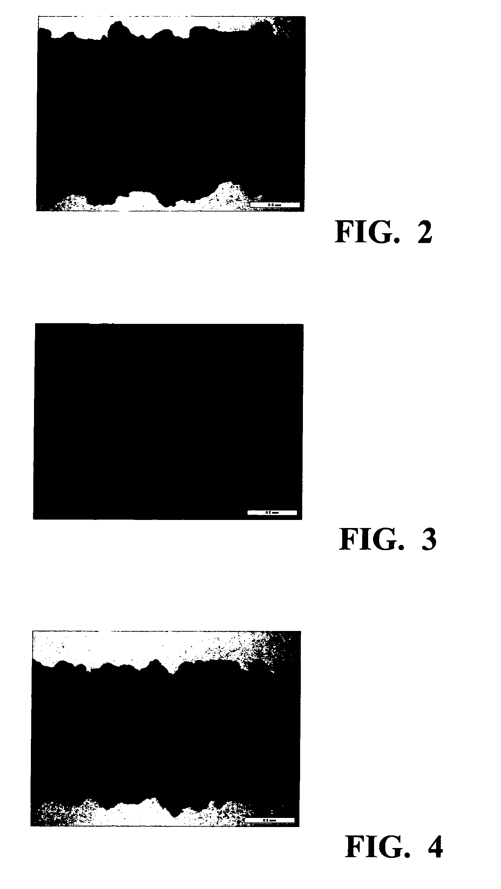

As shown in Table 1, a copolyetherester with a viscosity of 198 Pa·s at 240°C and at a shear rate of 2000 s⁻¹ showed a good surface aspect of strand extruded at both 5000 s⁻¹ (FIG. 1A) and 7000 s⁻¹ (FIG.1B) (**C1**). With a copolyetherester having a viscosity of 298 Pa·s at a shear rate of 2000 s⁻¹, the strand showed very poor surface aspect at shear rates of 5000 and 7000 s⁻¹ **(C2,** FIG. 2).

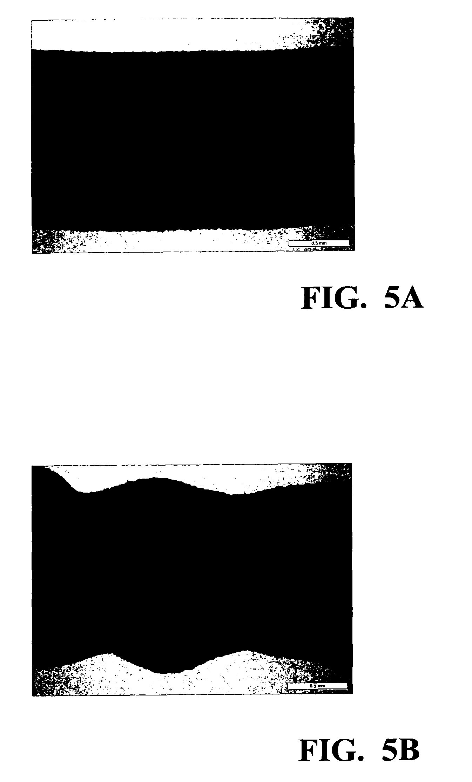

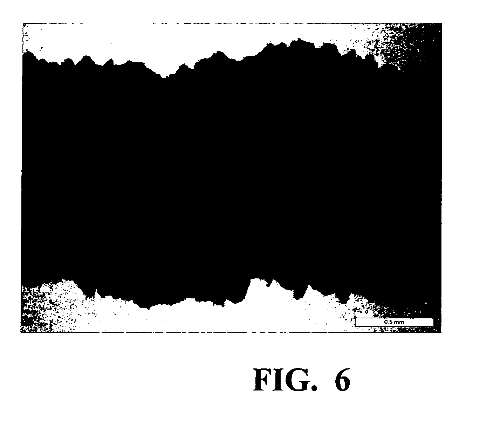

Compositions comprising conventional additives used in the state of the art, i.e. boron nitride **(C3,** FIG. 3), talc **(C4,** FIG. 4) or an ionomer **(C5,** FIG. 5A and FIG. 5B and **C6**, FIG. 6), to improve the surface appearance of a melt processed article still led to poor surface appearance at 7000 s⁻¹ shear rate. No synergistic effect was observed by adding boron nitride **(C7,** FIG. 7A and FIG. 7B) or talc **(C8,** FIG. 8A and FIG. 8B) to a composition that comprised an ionomer. The addition of a metal salt of a fatty acid to a copolyetherester composition did not lead to any improvement to the surface aspect of the manufactured part, neither by adding a short fatty acid **(C10,** FIG. 10) nor by adding a longer fatty acid (**C9**, FIG. 9 and **C11,** FIG. 11).

On the contrary, specimens made out of the copolyester elastomer composition according to the present invention, i.e. comprising a sodium ionomer and a salt of a fatty acid (**E1, E2** and **E3**) exhibited improved surface appearance as shown in FIG. 12-14.

## Claims

1. A process for making hollow bodies comprising a step of melt extruding a composition comprising:
a) at least one copolyester elastomer; and
b) at least two salts of a carboxylic acid, b1) and b2), having at least six carbon atoms;
wherein said composition has an apparent melt viscosity higher than 220 Pa·s measured according ISO 11443:2005(E) under a shear rate of 2000 s⁻¹ and at a processing temperature at or about 30°C above the melting point of the copolyester elastomer.

2. The process according to claim 1, wherein one of the at least two salts having at least six carbon atoms is b1) a sodium ionomer or a mixture of sodium ionomers and one of the at least two salts is b2) a salt of a fatty acid or a mixture of salts of one or more fatty acids.

3. The process according to claim 2, wherein the salt of fatty acid or mixture of salts of fatty acids b2) comprises a sodium salt or a calcium salt of fatty acid.

4. The process according to claim 2 or 3, wherein the sodium ionomer or mixture of sodium ionomers b1) is present in an amount from at or about 0.1 wt-% to at or about 20 wt-% and the salt of a fatty acid or a mixture of salt of a fatty acids b2) is present in an amount from at or about 0.1 wt-% to at or about 20 wt-%, provided that the sum of components b1) and b2) is less than 20 wt-%, the weight percentages being based on the total weight of the at least one copolyester elastomer and the at least two salts of carboxylic acids, i.e. the sum of components a) and b).

5. The process according to any preceding claim, wherein the one or more copolyester elastomer is prepared from monomers comprising poly(tetramethylene oxide) glycol; isophthalic acid and/or terephthalic acid; and 1,4-butanediol and/or 1,3-propanediol.

6. The process according to any one of claims 1 to 4, wherein the one or more copolyester elastomer is prepared from monomers comprising poly(trimethylene oxide) glycol; isophthalic acid and/or terephthalic acid; and 1,4-butanediol and/or 1,3-propanediol.

7. The process according to any one of claims 1 to 4, wherein the one or more copolyester elastomer is prepared from monomers comprising ethylene oxide-capped polypropylene oxide glycol; isophthalic acid and/or terephthalic acid; and 1,4-butanediol and/or 1,3-propanediol.

8. The process according to any preceding claim, wherein the step of melt extruding is selected from blow molding, profile extrusion and corrugated extrusion.

9. The process according to claim 8, wherein the step of melt extruding is blow molding.

10. A blow molding process for making hollow bodies made out of a copolyester elastomer comprising the steps of:
a) forming a melt of the copolyester elastomer composition described any one of claims 1 to 7;
b) extruding said melt through a die to form a hollow parison;
c) positioning the hollow parison within a mold cavity having an interior surface;
d) sealing the ends of the parison;
e) injecting a compressed gas into the parison so as to expand the parison to conform to the interior surface of the mold cavity;
f) cooling the parison so as to solidify it into a blow molded hollow body; and
g) opening the mold and removing the blow molded article from the mold cavity.
